# EUROPEAN PATENT SPECIFICATION

(11) **EP 0 400 620 B1**
(45) Date of publication and mention of the grant of the patent: **30.07.1997**
(21) Application number: 90110286.3
(22) Date of filing: 30.05.1990
(51) Int. Cl.: G06F 17/24, G06F 17/60

(54) **Method for hiding and showing spreadsheet cells**
Verfahren zum Verstecken oder Sichtbarmachen von Zellen in einem elektronischen Kalkulationsblatt
Procédé pour cacher ou révéler des cellules d'une feuille de calcul électronique

(30) Priority: 31.05.1989 US 359678
(43) Date of publication of application: 05.12.1990
(73) Proprietor: MICROSOFT CORPORATION, Redmond, Washington 98052-6399 (US)
(72) Inventor: Michelman, Eric H., Saratoga, California 95070 (US); Ben-Hur, Devin E., Mountain View, California 94040 (US)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) References cited:
- EP-A- 0 294 187
- INTERNATIONAL TECHNOLOGY DISCLOSURES. 25 March 1986, TINLEY PARK, ILLINOIS, US ANONYMOUS 'Spatially displaced rows and columns of spread-sheet display method displaying pop-down on screen allowing operator to select option to hide certain rows and columns; DOCUMENT NUMBER: TP38603'
- IBM TECHNICAL DISCLOSURE BULLETIN. vol. 24, no. 4, September 1981, ARMONK, NY,
- US pages 1869 - 1876 R.B. MILLER 'Simplified matrix programming'
- RESEARCH DISCLOSURE. no. 301, May 1989, NEW YORK, US page 302 , XP52466 'Data suppression Hierarchy in Document Composition'
- BYTE July 1985, US pages 279 - 284 W. HERSHEY 'MaxThink'

## Description

### BACKGROUND OF THE INVENTION

### Copyright Notice

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### Field of the Invention

This invention relates to a method of determining hierarchical relationships among cells in a spreadsheet and more particularly a method of hiding and showing cells in a spreadsheet based on hierarchical relationships among the cells.

### Description of the Prior Art

The most common software application used on personal computers in business is the spreadsheet. Spreadsheets are commonly used for a wide variety of applications. These include financial applications such as budgets, forecasts, income statements and balance sheets; database applications such as customer lists, sales records, personnel files, and equipment inventories. Other applications include graphics and even word processing.

What makes spreadsheet software so useful and widespread is its simplicity and versatility. It offers a raw two (or more) dimensional grid of cells which the user can utilize as desired. Numbers and/or words can be entered into any of the cells as desired. A wide variety of operations are then available for use with this data, such as totaling, sorting, graphing, copying, moving, word justification, and more. This combination of free-form data entry and then extensive commands for operating on the data is a powerful combination which allows spreadsheet software to be used effectively in a wide range of applications.

However, this flexibility also has drawbacks. By being flexible enough for use in a wide range of applications, spreadsheet software is more limited than necessary for any one application.

Three important limitations of spreadsheet software exist in financial applications including (1) spreadsheet data is limited to RAM which limits the size of the worksheets that users may operate; (2) large worksheets become unwieldy such that it is hard to create summary views of the worksheet for viewing, printing, or graphing; and (3) the operations offered by the spreadsheet software are ignorant of the structure inherent in financial worksheets (i.e. categories and time periods). These three limitations are discussed in more detail below.

A limitation in all of the popular spreadsheet software today is that the spreadsheet data must be held in free RAM (i.e. the RAM that is left over after the operating system, the spreadsheet software, and any co-resident applications are loaded) while the worksheet is being used. In contrast to other applications such as databases and some word processors, spreadsheet software does not take advantage of disk storage to hold data that is being operated on. This is a severe limitation for users wanting to work with large spreadsheets. Currently, the only solution for users desiring more spreadsheet data space is to purchase more RAM, and then using special-purpose hardware or software called expanded memory to expand beyond DOS's 640K-byte memory limit.

It is the flexibility inherent in spreadsheets which requires spreadsheet data to be stored in RAM during the operation of the spreadsheet software. Because any cell can be viewed at any time and any cell can refer to any other cell in a formula, the spreadsheet software must keep all the cell contents in RAM, where the contents of each cell can be quickly accessed. Storing cell contents on disk would slow display and recalculation down to a level which users would find unacceptable.

The uniformity of spreadsheets (i.e. a homogenous grid of rows and columns), which contributes greatly to the flexibility and ease-of-use of the spreadsheet, becomes a negative feature as the users' worksheets become large. With many rows and columns, it becomes difficult and time-consuming to find items of interest, to move around the worksheet, to rearrange it, to comprehend the data, to display or print summary data, and so forth. Also, recalculation time slows down as the spreadsheet gets larger.

The generality of spreadsheet software leads to the third limitation in working with financial worksheets, which is the difficulty in manipulating the worksheet. There is a certain structure to financial worksheet, which relates to the information contained within it and common operations performed on the information. Popular spreadsheet software is ignorant of this structure. This results in simple operations taking much more time than would be necessary if this financial worksheet structure or other application structures were utilized in spreadsheet functions.

From "International Technology Disclosures", 25 March 1986, Tinley Park, Illinois, US, Document Number : TP38603, a method is known which permits the operator of an interactive data processing system to remove selected rows and/or columns of a spreadsheet that is being displayed and move the remaining rows and columns together. Thereby, after selecting the hide option, the operator selects those rows and columns that are to be hidden. Subsequently, the operator selects an execute function which causes the spreadsheet to be displayed with all none-hidden rows and columns moved together.

### SUMMARY OF THE INVENTION

The present invention as claimed provides a method for hiding and showing spreadsheet cells of a worksheet being displayed on a computer system display means. The hiding and showing is based upon hierarchical relationships among the spreadsheet cells. This technique is implemented by first determining hierarchical relationships among cells based on cell indentation, content, and formulas. A group of contiguous cells having a common hierarchical relationship is then selected and hidden. Totals for the group of cells may then be shown in place of hidden cells. The hidden group of cells may be stored in a memory location other than main memory such as a magnetic or optical disk. The group of cells may then be retrieved from memory and shown on the display means.

As a result of this technique, the user can increase the size of the worksheet without being constrained by the size of the computer main memory. In addition, the user can easily create a summary worksheet without duplication or loss of data while also preserving the structure of the worksheet. In a smaller or summary worksheet, it is easier to find items of interest and it is easier to understand and absorb the contents of the worksheet. Furthermore, this technique allows the user to more easily create reports and graphs with varying levels of summary or detail.

A further understanding of the nature and advantages of the present invention can be realized by reference to the remaining portions of the specification and the attached drawings.

### BRIEF DESCRIPTION OF THE DRAWINGS

Figs. 1a-1e are screen displays of a budget worksheet;
Figs. 2a and 2b are block diagrams of a computer system utilizing first and second embodiments of the invention;
Figs. 3a-3h are flowcharts showing the operation of the first embodiment; and
Figs. 4a-4d are structure charts showing the structure of the first embodiment.

### DETAILED DESCRIPTION OF THE PREFERRED EMBODIMENTS

### User View

A first preferred embodiment of the present invention is a technique for showing and hiding sections of the worksheet corresponding to different hierarchies within the worksheet. This process referred to is hereinafter referred to as spreadsheet outlining. By showing or hiding different levels of detail and totals within the worksheet, the user can easily create different summary views of the worksheet, all within the same single worksheet. The user may hide rows to create a summary view by row category and/or hide columns to create a summary view by time period. This is much simpler, easier, faster, and reliable than creating multiple versions with formulas and links between versions. Similarly, in a three dimensional spreadsheet, the user may hide across the third dimension (and so forth for an n-dimensional spreadsheet).

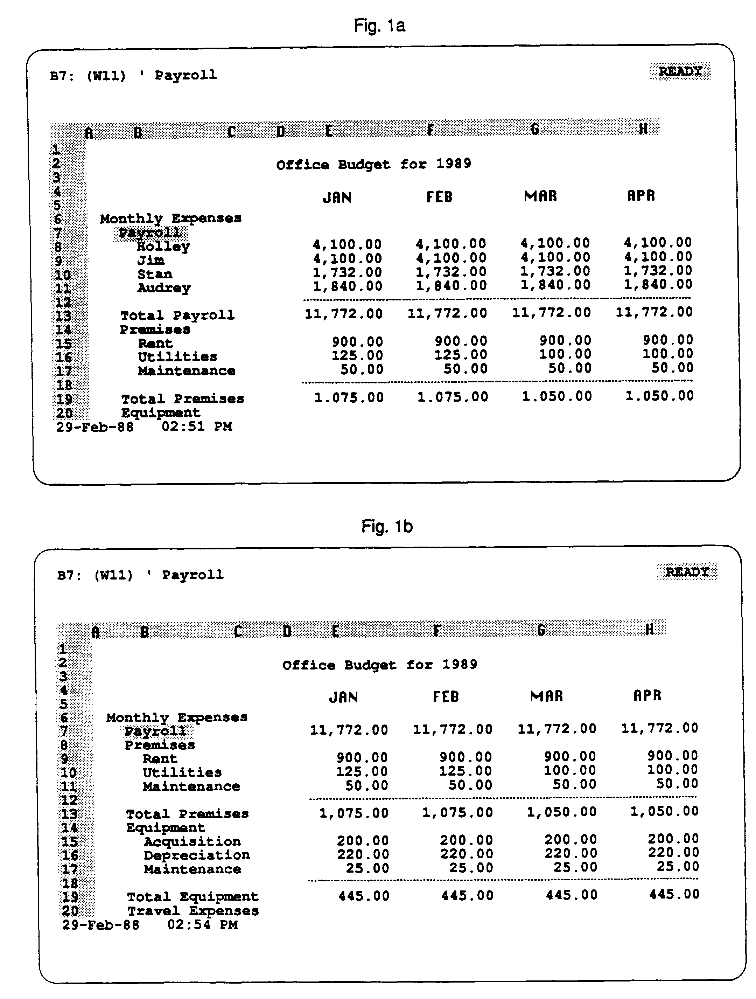

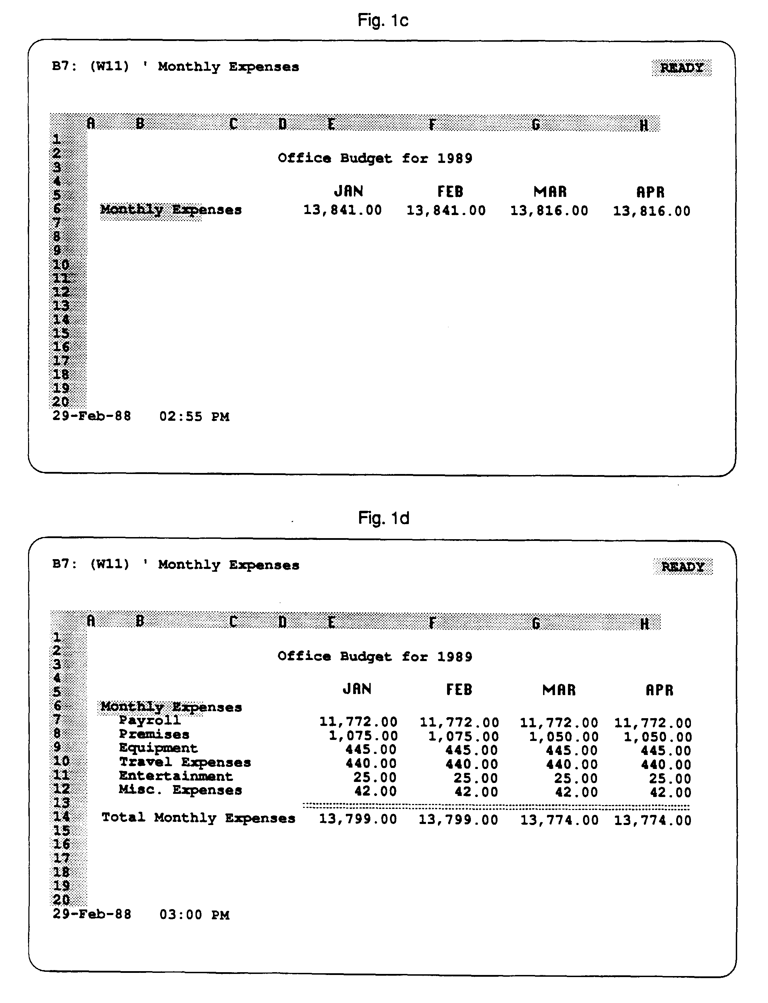

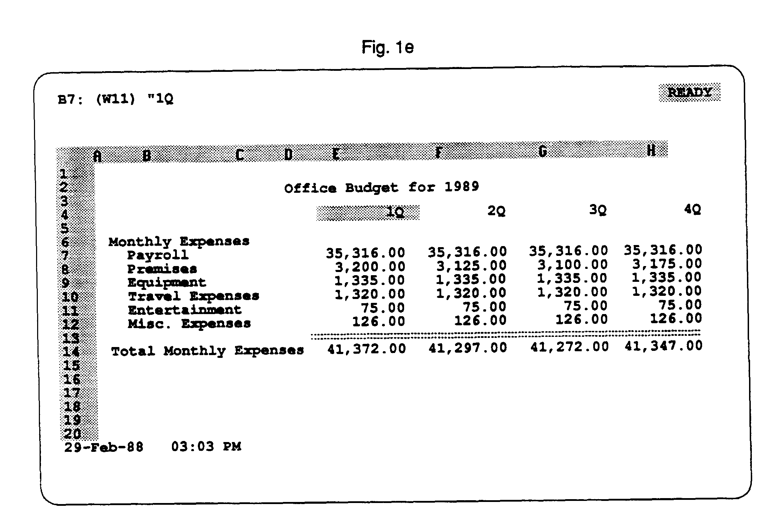

Fig. 1a shows a screen displaying a portion of a budget worksheet. The user may hide a portion of the budget such as the detail rows under Payroll as shown in Fig. 1b. The user may hide the entire Monthly Expenses category rows as Shown in Fig. 1c or several portions of the Monthly Expenses category rows as shown in Fig. 1d. In addition, the user may hide or compress the monthly totals columns as shown in Fig. 1e.

By hiding sections of a worksheet, then showing sections of interest at a time, the user works with a smaller worksheet. As a result, it is easier to find items of interest, the worksheet is easier to understand and absorb, summary reports can be printed directly from the displayed worksheet, and the worksheet may recalculate faster.

In the first embodiment, hidden data may be moved off the worksheet. It can be moved to a variety of places, including to a disk drive, to an unused portion of the spreadsheet, or to other storage devices. Alternative embodiments may also move the data to RAM or simply suppress the display of the data without moving it.

When a category is hidden, the totals for that category remain on the worksheet. Typically, a financial worksheet will have a row with a category label, followed by detail lines, followed by a total line for that category, (e.g., see Payroll in Fig. 1a).

When hiding Payroll in Fig. 1a, the first embodiment moves the detail rows (Holly, Jim, Stan, Audrey) and the overscore out of the worksheet. If the data is being moved out of the spreadsheet entirely (e.g. to disk) and the total line contains formulas to calculate the totals, the first embodiment records the total formulas and replaces the total formulas with just the total numbers themselves. The total numbers are then moved up to the category label row (next to Payroll). The total label ("Total Payroll") is then moved off the worksheet. The result is shown in Fig. 1b. When the hidden data is later reshown, the process is reversed and the total formulas are reinserted. When hiding columns to show only the totals for higher-level time periods (e.g. hiding months to show only quarter and year totlas), if the totals weren't already present in the worksheet, the first embodiment calculates them and then treats them as if they were. Alternative embodiments may also calculate totals for rows.

Moving the hidden data to a disk drive or other storage device provides the benefit of freeing the RAM that was used for that data, releasing it for use by other data. This allows the worksheet to grow beyond the size of RAM. That is, hidden portions of the worksheet reside on disk, while the un-hidden portions remain in RAM. To view the portion on disk, the user requests that the hidden portion be "shown". This has the effect of moving the hidden portion from disk to RAM for reinsertion in the spreadsheet. If there is not enough RAM to hold the data to be shown, the user is prompted to select another category of data to be hidden on disk.

It is Spreadsheet Outlining which allows portions of the worksheet to be moved to disk. The reason it is not done generally with spreadsheets is that they do not have enough structure to make intelligent decisions about which data can be moved to disk without being needed for display or formula recalculation. However, implicit in Spreadsheet Outlining is knowledge about which data is to be viewed and which is to be hidden at any given time. This removes the need to keep the data in the spreadsheet for display purposes. And when data is hidden, Spreadsheet Outlining replaces the total formulas referring to the hidden data with just the total numbers. This can be done because with the data hidden it cannot be changed and therefore the totals will not change until the data is re-shown. This removes the need to keep the data in the spreadsheet for formula recalculation.

Spreadsheet Outlining has additional capabilities for manipulating financial worksheets. A re-organization facility allows the user to point to a category title, point to where it should be put in the worksheet structure, and then have it automatically moved to the indicated place. All subsidiary rows are moved with the category title and no further spreadsheet operations such as inserting or deleting blank rows are necessary.

### Operational View

The first embodiment exists within the context of an Electronic Spreadsheet (initially Lotus Development Corporation's 1-2-3). Such a spreadsheet is characterized by the ability to store data (numbers, text-labels, formulas) in cells organized in a two dimensional matrix in memory (a spreadsheet). In the existing implementation, the host spreadsheet program maintains and displays the data, and the first embodiment is responsible for extending the host's command set and functionality to implement outlining and storage of hidden data on disk. Alternatively, the outlining and storage of hidden data on disk could be integrated with the spreadsheet program to create a second preferred embodiment offering all these functions.

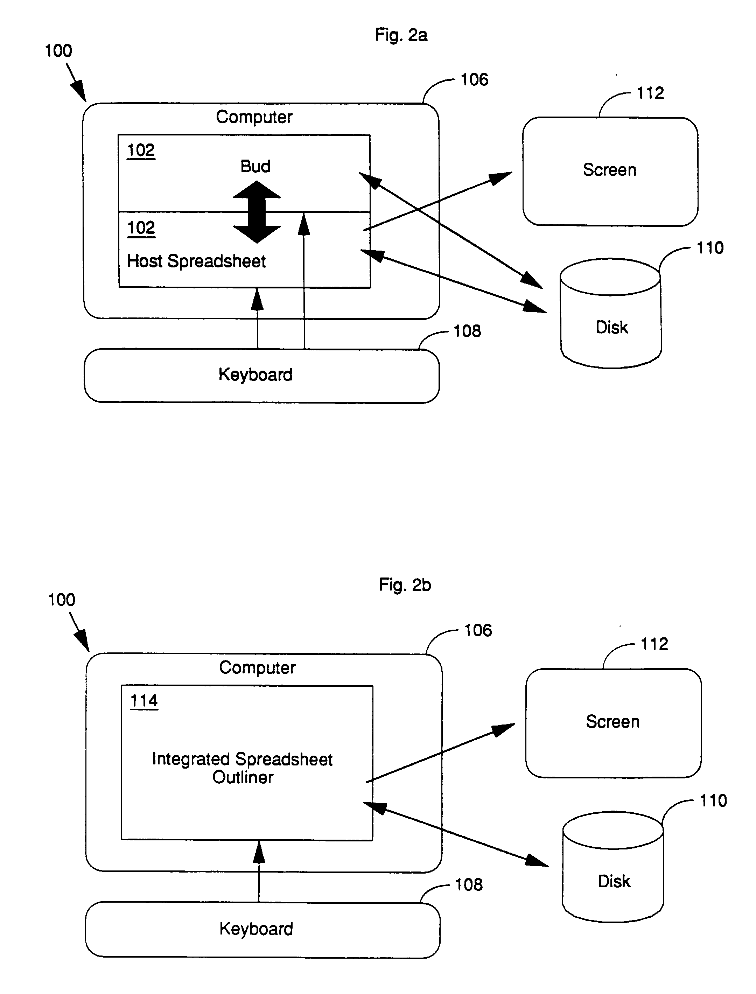

Fig. 2a is a block diagram showing the first embodiment within a computer system 100. The first embodiment (hereinafter referred to as Bud) 102 resides with a host spreadsheet program 104 in a computer 106. Both the first embodiment (Bud) and the host handle communications from a keyboard 108 and a disk 110.

However, only the host handles communications to a display screen 112.

Fig. 2b is a block diagram showing the second embodiment within computer system 100. The second embodiment is an Integrated Spreadsheet Outliner 114 having all the functions of the first embodiment and the host spreadsheet program described above. However, there are efficiencies of implementation by combining the two programs.

### General Functionality

The functionality involved is the ability to analyze data on the spreadsheet in order to discover hierarchical organizations of data which can then be manipulated so as to give the appearance of hiding and showing groupings and sub-groupings of data. Data manipulation consists of combinations of: moving data to/from remote regions of the spreadsheet, moving data to/from secondary storage media (typically magnetic disk drives), setting hidden column attributes, and introducing new data representing summary information calculated from the original data.

BUD is implemented as an addin product for Lotus 123. In this environment the first embodiment receives control at several points. The user may invoke Bud by pressing a certain key sequence. This causes a routing to display a menu allowing the user to select an action such as hiding rows, showing rows, or setting the column detail display level. These commands will then be dispatched to the appropriate routines.

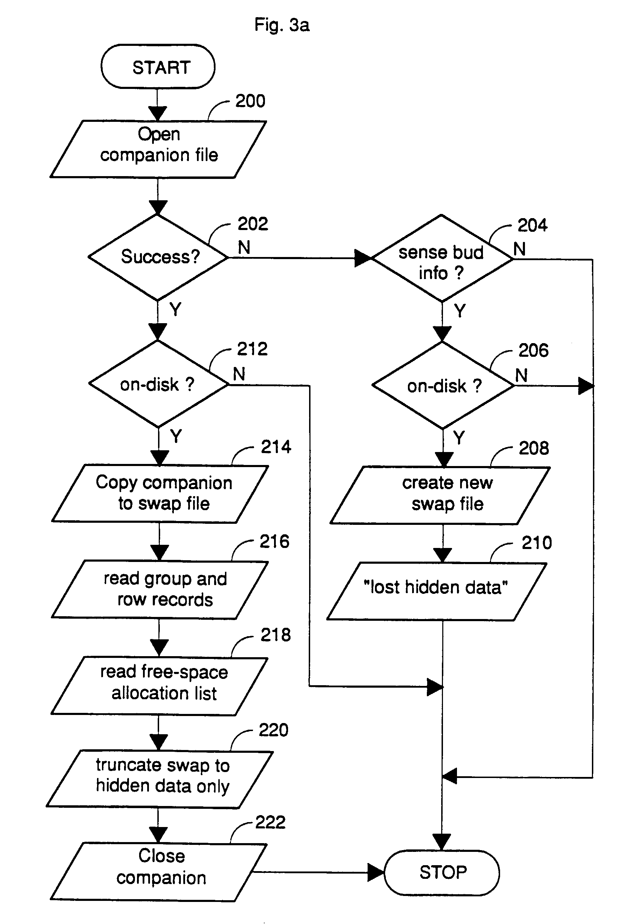

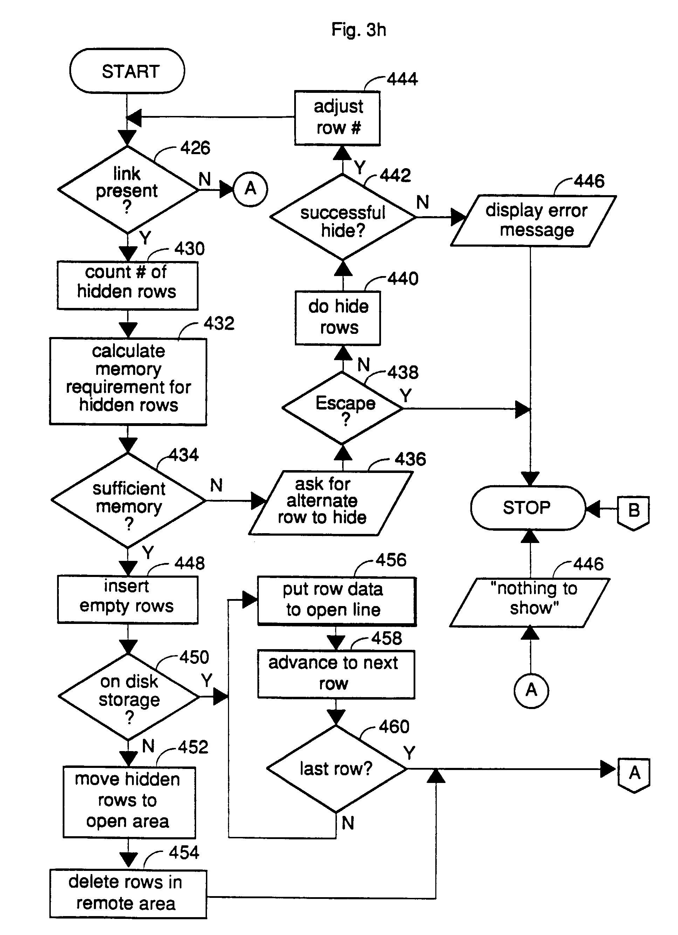

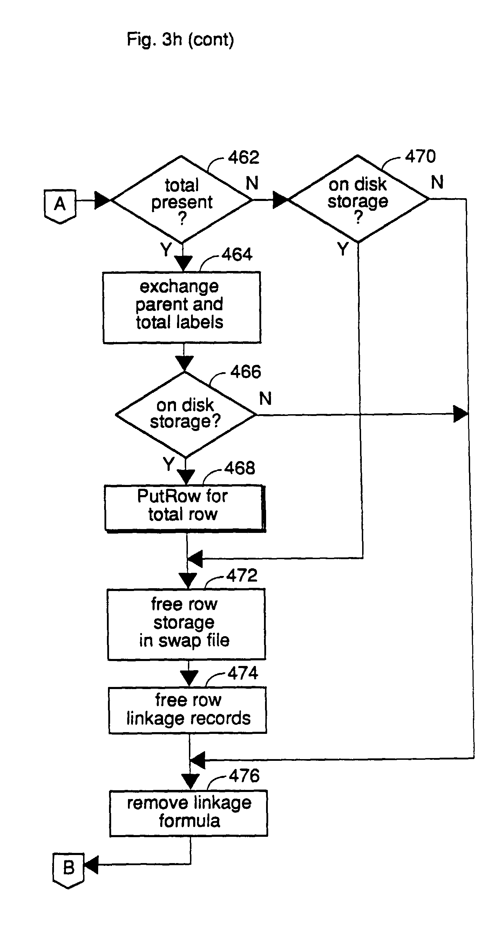

Fig. 3a shows the process when a previously saved worksheet file is loaded by the host spreadsheet. Bud will first open a previously saved companion file (step 200). The companion file has the same name as the worksheet file, but with a different extension (.bud). If there is no companion file (step 202), Bud will examine the sheet for Bud specific information (Step 204). If tag formulas indicating hidden rows stored to disk are detected (step 206), Bud will initialize a swap file (step 208) and display a "lost hidden data" message (step 210). If the file is found (step 202), and there is on-disk storage (step 212), Bud will copy the companion file to a swap file (step 214), read the linkage information (step 216), and free list information (step 218), and truncate the swap file to hidden data (step 220), before closing the companion file (step 222).

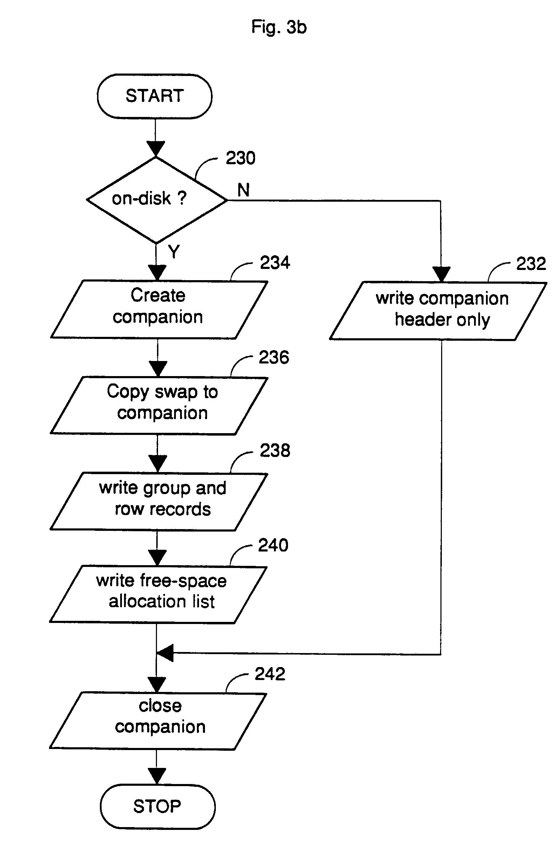

Fig. 3b shows the process when a worksheet file is saved by the host spreadsheet. Bud will be notified so that it may save a companion file. If on sheet storage is used (step 230), Bud only writes some basic header information with house keeping into the companion file (step 232). If on-disk storage is used (step 230), the swap file is copied to the companion (steps 234 and 236), linkage information and free-list information is written (steps 238 and 240) before closing the companion file (step 242).

### Determining Row Hierarchy

Hierarchical groupings are determined in two distinct ways, one for each axis of the spreadsheet matrix.

A row group consists of a "parent" row, subsidiary "children" rows below it, and possibly a total row below the children. A row group is determined primarily from the relative indentation of data within a row. A row's indentation is determined by scanning from left to right until a non-blank cell is encountered. If this cell is textual, then the number of leading spaces in the text is considered low-order indentation information. That is, a whole column of indentation is always more significant than any number of leading spaces. Rows of greater indentation are considered to be "owned" or grouped under preceding rows of lesser indentation. If no indentation is used or it is ambiguous, labels and formulas are also examined. If line has a label beginning with the literals "Tot" or "sub" and ends with the literal that comprises the parent row's row header (the label in the leftmost cell in the row), then that row is a total line which concludes the group. Similarly, if a row is encountered which contains a formula totaling from the parent row to that row, it is considered to be a total line for that group and therefore concludes the group.

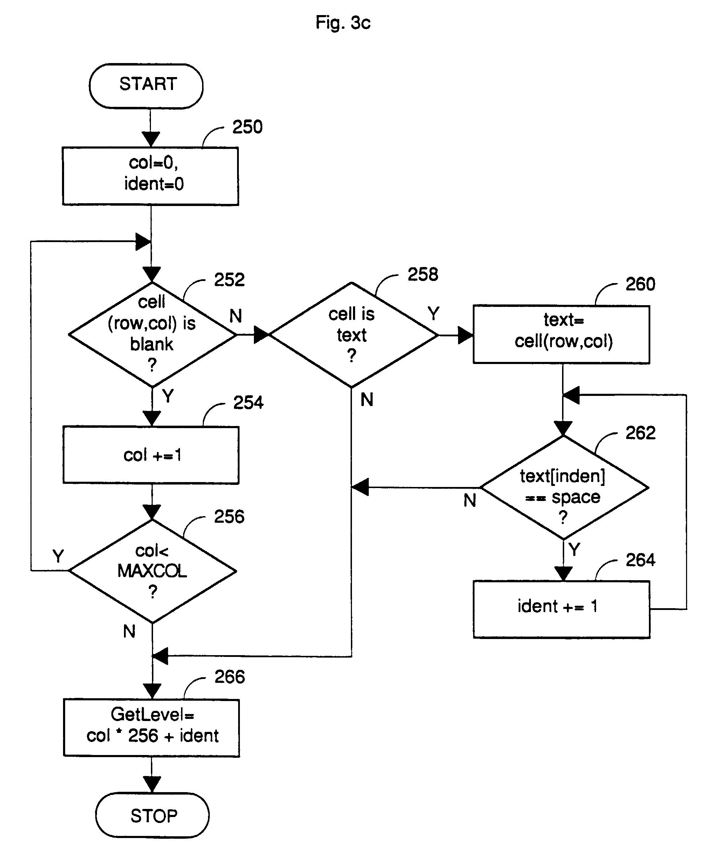

The indentation of a row is determined by the GetLevel routine whose flowchart is given in Fig. 3c. In a first step 250, column and indentation variables are initialized. The cell at (row, col) is examined (step 252). If cell is blank, col is incremented (step 254) and tested against the maximum column scanning limit (step 256) to control looping. The column scanning limit is the right most column used by the user unless the user specifies a different column. If the cell is non-blank (step 252) and contains text (step 258), the text is retrieved. A loop is used to count the number of leading spaces in the text (steps 258, 260, 262, and 264). The level information is encoded as 256 times the column indentation plus the count of leading spaces (step 266).

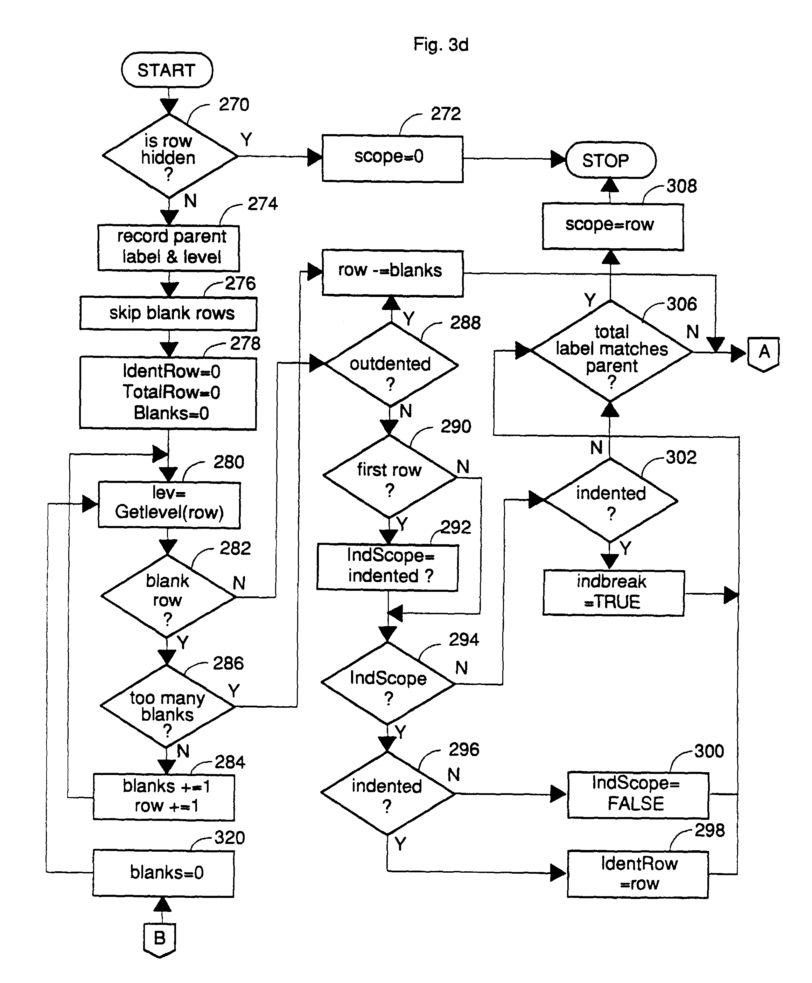

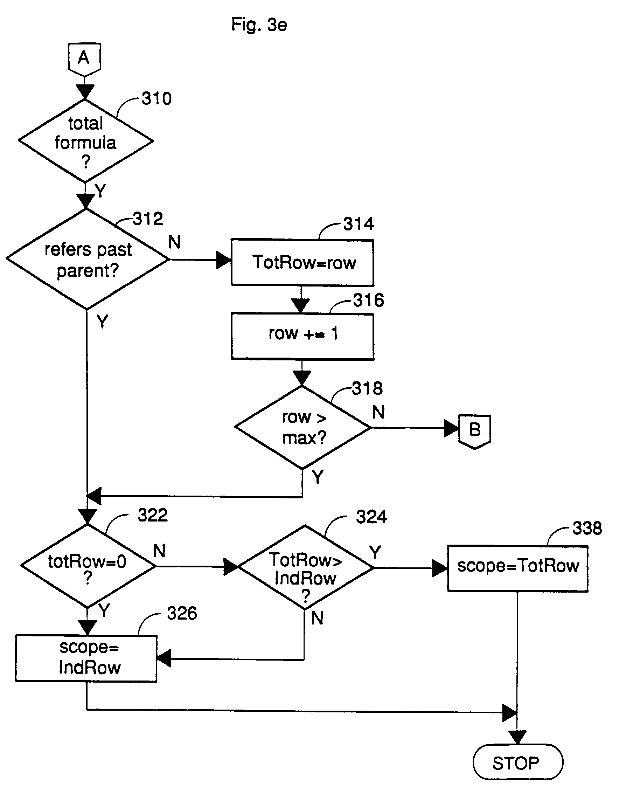

The discovery of row ownership is done through the ScopeForward routine whose flowchart is given Figs. 3d and 3e. The variable row begins with the value of the row to be scoped. If the initial row already has hidden rows (step 270), there is no further scope (step 272). If the initial row does not already have hidden rows, then the level information and label of the parent row are recorded for later comparison (step 274). Any initial blank rows are skipped (step 276). The IndentRow and TotalRow variables are initialized (step 278). These variables represent the furthest scoped rows due to indentation detection and to summary total formula detection respectively. The row indentation level is then calculated (step 280). If the row is a blank row (step 282), the blank count is incremented (step 284) and if past a threshold value (step 286), the main scoping loop is terminated. If the row is outdented from the parent row (step 288), the scoping loop is terminated. If the row is the first row (step 290), then the indScope flag is set based the indentation of this first row (step 292). If indent scoping is active (step 294), the current row level is compared against the parent row level (step 296). If it's indented, IndentRow is advanced to current row (step 298), otherwise indentation scoping is de-activated (step 300). If indentation scoping is deactivated (step 294), an indented row will flag subsequent termination of the scoping loop (steps 302 and 304). If the row contains a total label that matches the value text of the parent's label (step 306), the scope is determined to reach the current row (step 308). If the label does not match (step 306) and there is a summary formula present (step 310), the formula is examined. If the formula refers to cells prior to the parent row (step 312), the scoping loop is terminated. Otherwise, TotRow is advanced to the current row (step 314). The current row variable is then incremented (step 316) and tested for row scanning limits before continuing the main scoping loop (step 320). Upon completion of the main scoping loop (off page connector A), the greater of the IndentRow and TotalRow values is used to determine the scope of the parent row (steps 322, 324, 326 and 328).

### Determining Column Hierarchy

Column-wise hierarchies are determined by the relationship of column header cells to the time based groupings: month, quarter, and year. There are no "owner" columns, but there will be total columns which represent summary data for columns to the left of the respective total columns, based on the time periods included in the total. For example, there may be a column for "Year 1988" which is the total for the 12 previous columns representing data for "January 88" through "December 88".

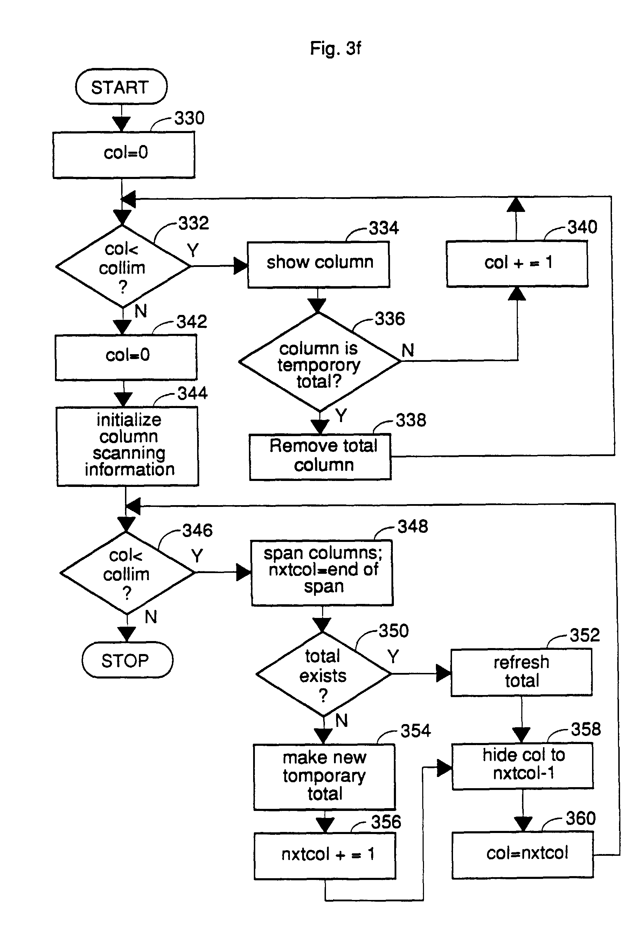

The SetColLevel routine handles column wise hierarchy scanning and detail level control as given in Fig. 3f. The level of detail display is supplied by the user. Columns are first fully expanded by looping over all columns (steps 330-340). Each column is shown by turning off the "hidden" attribute (step 334). If the column is a temporary total (step 336), it is removed and scanning continues with the next column which will now be at the temporary's index. Otherwise, the column index is incremented (step 340) to continue showing columns. After the columns are fully expanded, the column scanning information is then reinitialized (steps 342, 344). The columns are again examined from left to right with a loop (steps 344-360). Each pass through the loop will use a routine to find the next set of columns which are contained in the same period as the current column. If the last column spanned is a total (step 350), it is refreshed (step 352). Otherwise, a temporary total column is inserted (step 354) and the next column variable is incremented (step 356). All the spanned columns (but not the last one) are then hidden (step 358), and the current column is advance to the next column (step 360) after the span.

### Hiding Rows

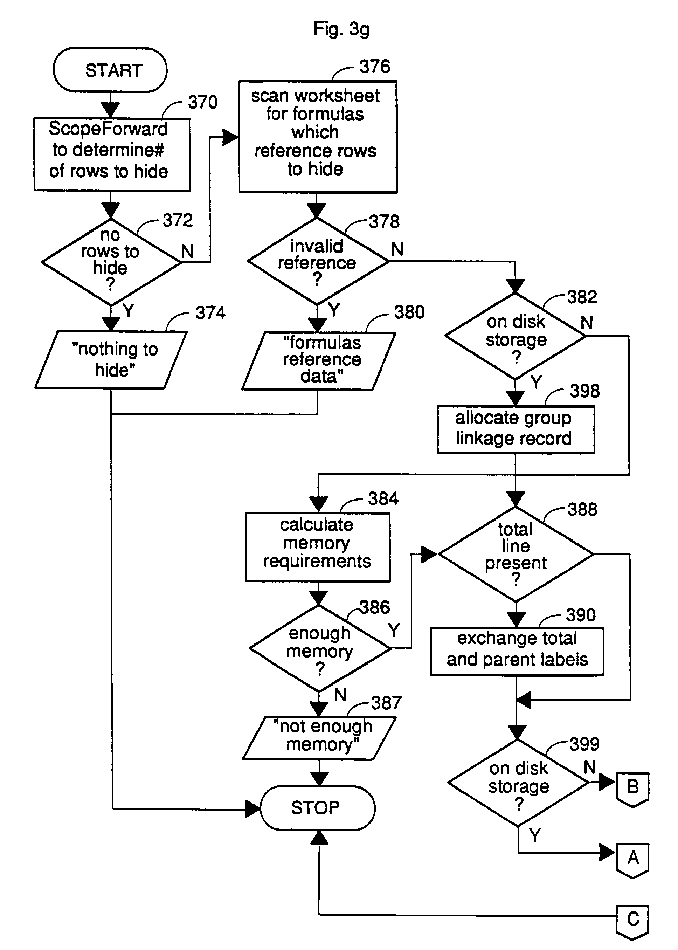

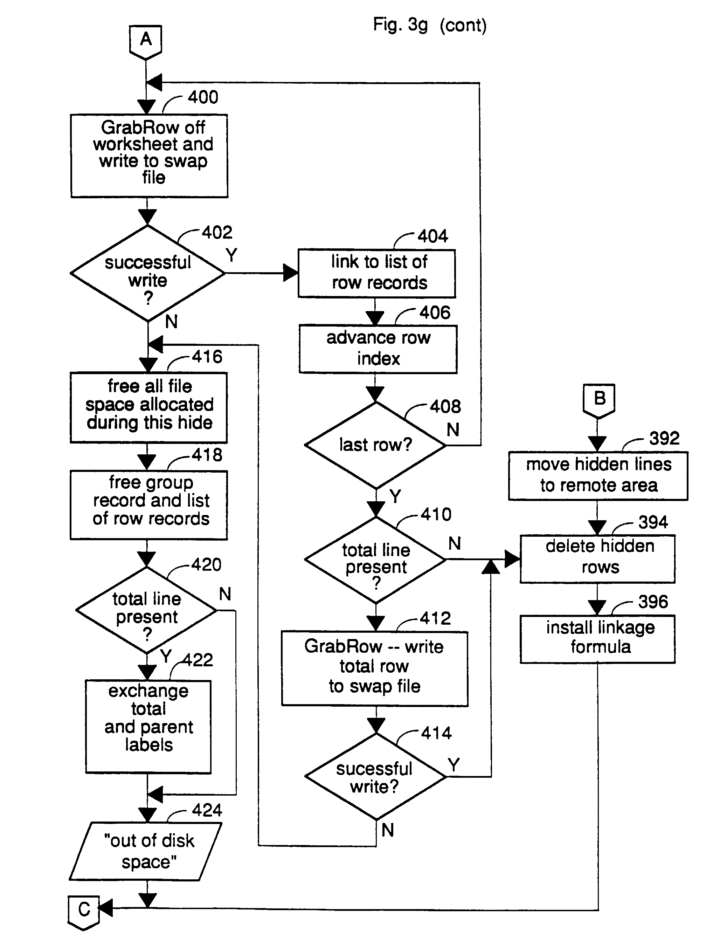

Groups are hidden in response to commands issued by the program operator. The flow chart for the hide rows operation is given in Fig. 3g.

First, rows are examined sequentially starting from the current row to determine which rows belong to the group to be hidden (step 370). This involves examining indentation levels, labels, and formulas, as described above in "Discovering Groups". If no rows are discovered to be owned by the current row (step 372), no action is taken (step 374).

Once the rows in the group are discovered, then the formulas of all rows must be examined to determine if they reference data that is about to be hidden (removed) from the spreadsheet (step 376). References to the total line, if present, are allowed, as this data will remain available. If invalid references are discovered (step 378), the hide operation is disallowed (step 380).

The physical manipulation of data now occurs. There are two storage options available in this implementation: on-sheet remote storage, and off-sheet disk-storage (step 382).

If on-sheet, memory availability is first calculated (step 384) and examined (step 386). If memory is available, the hidden row data is moved to a special reserved area of the spreadsheet matrix. First, exchange parent's and total line's label, if present (steps 388 and 390). This is because the total line will remain on the worksheet, but without the detail showing, the relevant label is that of the parent then move interior detail lines (and parent line if total present) to reserved area (step 392). Move subsequent lines (and total line) up to cover area vacated by interior lines (step 394). Finally, install a linkage formula in column A (step 396) to connect the visible line (parent or total, as appropriate) to the hidden rows. This linkage formula causes a plus-sign to appear in the reserved spreadsheet column.

If off-sheet (step 382), a group linkage record is allocated (step 398), parent and total line's labels are exchanged (steps 388 and 390). Interior detail lines are transferred by writing the contents of each cell sequentially to the disk file area allocated. As each line is succesfully written (steps 400-402), a row locator record is allocated and linked to the list of row locators from the group linkage record (steps 404, 406, 408). If a total line is present (step 410), save the total line to the disk file and replace its formulas with constants representing their current values (steps 412-414) before covering hidden areas (step 394). The linkage formula in Column A (step 396) contains the ID number of a group-record which is linked to the list of row-records made in steps 400-410. If an error is encountered when writing hidden lines to disk (step 402 or 414), the hide operation is undone by releasing allocated file space (step 416), freeing group and row locator records (step 418) and re-exchanging the parent and total labels (steps 420, 422).

### Showing Rows

Hidden groups may be shown in response to commands given by the program operator. This is the inverse operation to hiding rows and when successful will restore the spreadsheet to the appearance it had before the hide operation. Examine row for presence of linkage formula in the first column (step 426). If no linkage, there is no hidden data (step 428). Calculate number of hidden rows and memory requirements (steps 430 and 432). If there is insufficient memory (step 434), allow user to hide other rows or terminate the show operation (see Swapping below) (steps 436, 438, 440, 442, 444 and 446). Open blank area on sheet by moving subsequent rows down (step 448). If on-sheet move hidden row data into newly opened area (steps 450, 452). If on disk, follow row-record links sequentially from group record and sequentially read cell contents from disk swap file (steps 456, 458, and 460). If total line present, exchange parent's and total's label (steps 462 and 464). If off-sheet storage, read total line's formulas from final hidden row record (steps 466 and 468). Release all disk storage allocated to the lines displayed (step 472) and free the group and row-locator records (step 474). Remove linkage formula from column A (step 476).

### Swapping

The hierarchical organization of rows gives the program operator a convenient grouping for swapping spreadsheet data in and out of limited memory. With off-sheet storage, memory is reclaimed when groups are hidden. This enables the creation of spreadsheets larger than the central memory capacity of the computer.

For a spreadsheet larger than memory, the entire sheet may not be displayed at one time. It is possible that there will not be enough memory available to execute a show command. When this occurs, the program will allow the operator to point at an alternative group to hide. The program will hide the alternative group and then re-attempt the original show command (carefully keeping track of the shifting of row data due to hide operations). This loop will continue until the show operation succeeds or the operator terminates the command.

### Hiding and Showing Columns

Columns are hidden or shown based on a request to homogeneously display data at a given time-based interval: months, quarters, years, or all-data. When hiding columns, data is not physically transferred, rather the hidden-column attribute of the host spreadsheet program is manipulated to prevent display of the desired columns. Temporary columns may be introduced to display summary (total) data for groups of columns.
1) Scan column headers left to right noticing when a break from one unit at the appropriate interval to the next occurs.
2) If the last column for a group is not a total for the interval, move subsequent columns right one column and install labels and formulas calculating the totals.
3) Install a special formula in the top row for the total column which records whether it was temporarily installed and displays as a plus-sign.
4) If a temporary total column whose interval level doesn't match the display level of the current command is found, remove it by moving columns to the right of this column left one column. That is, if we're showing by quarter totals and encounter a temporary month total, remove it.
5) Set the hide/show attribute of each column based on the interval levels. That is, if showing by quarters, hide specific day and month columns, show quarters and years.

### Reading and Writing Spreadsheets

When hidden rows are stored off-sheet, there is a swap file maintained to hold the hidden data. When a normal spreadsheet Save or Retrieve command is executed, this swap-file must be transferred to/from a companion file with a common name component with the spreadsheet file. In addition the group-records, row-records, and free-space allocation list must be written to/from this companion file.

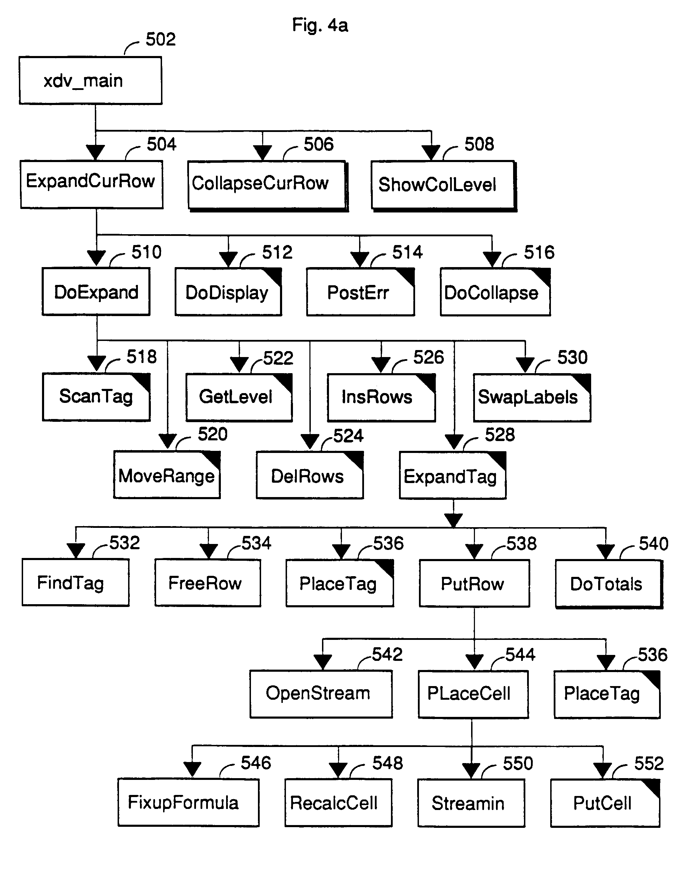

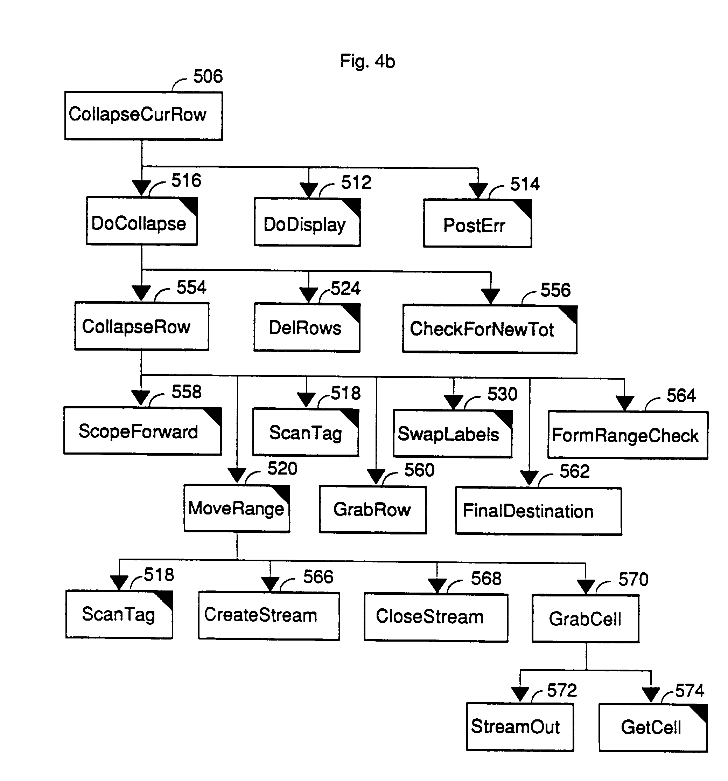

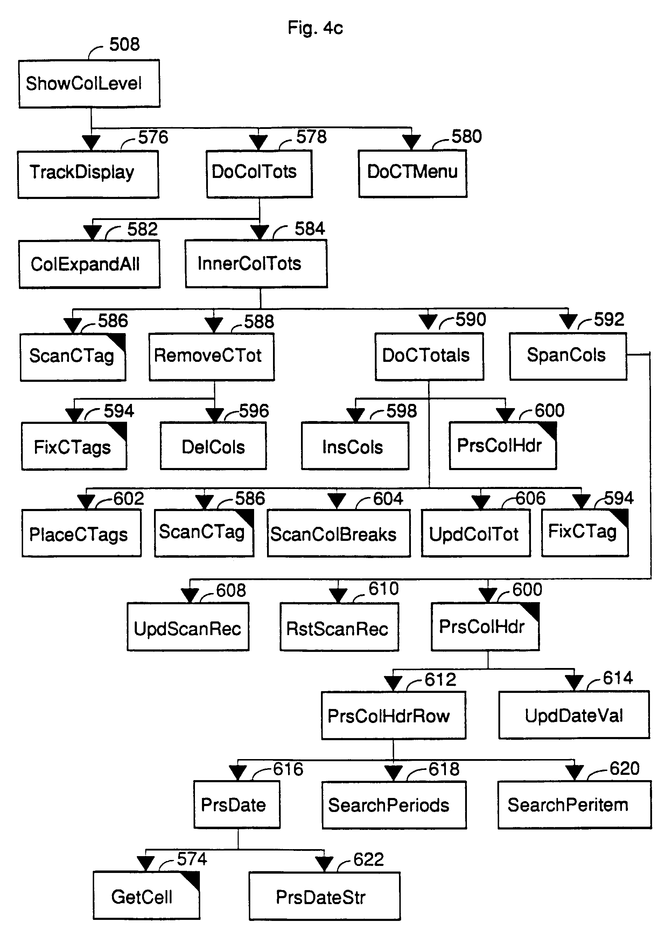

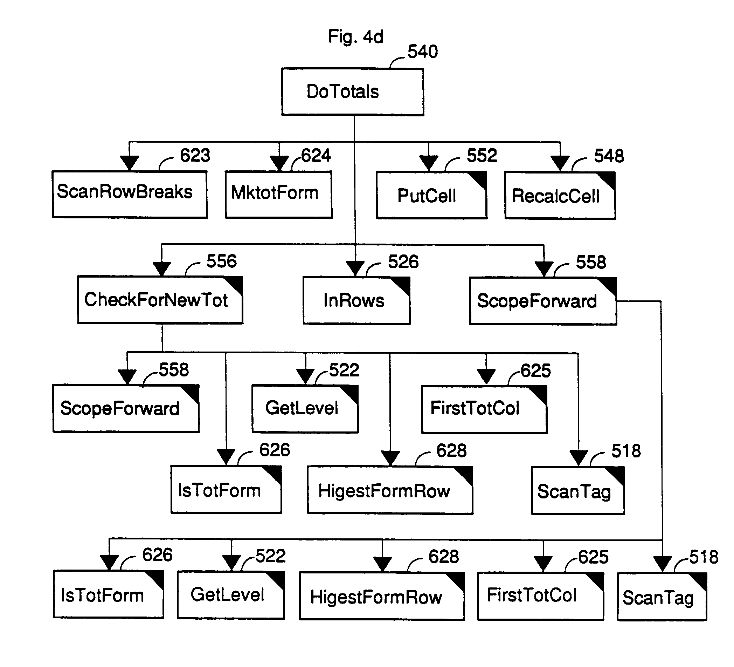

Figs. 4a-d are a structure chart of Bud. Each block represents a module or routine that is executed to perform a function. A block has a blackened upper right corner if the module is repeated elsewhere in the structure chart. A block has a shadow if it is shown in more detail in another drawing. It will be understood that in Figs 4a-4d, a calling module includes a function call to another called module if the calling module (e.g. PutRow 538) is shown above and pointing to the called module(s) (e.g. OpenStream 542, PlaceCell 544, and PlaceTag 536).

## Claims

1. In a computer having a display device, an entry device, and a processor for executing a spreadsheet program, the spreadsheet program causing a plurality of intersecting rows and columns to be displayed on the display device, some of the plurality of rows having a predefined relationship with other rows, the predefined relationship being either dominant or subordinate, a method of hiding selected ones of the plurality of rows comprising the steps of:
a) identifying a dominant row having a dominant relationship to at least one subordinate row;
b) automatically selecting the at least one subordinate row having a subordinate relationship to the dominant row; and
c) hiding the selected at least one subordinate row such that the at least one subordinate row is not displayed on the display device.

2. The method of claim 1 wherein each of the plurality of rows has a ranked indentation level and the step of selecting the at least one subordinate row further comprises the step of comparing the ranked indentation levels of a subset of the plurality of rows with the ranked indentation level of the dominant row to determine if a subordinate relationship exists between the rows in the subset and the dominant row.

3. The method of claim 2 wherein each of the rows in the subset has a beginning and each contains at least one blank space and the step of comparing the ranked indentation levels comprises the steps of:
counting the number of blank spaces at the beginning of each of the rows in the subset;
assigning a ranked indentation level to each of the rows in the subset using the counted number of the blank spaces; and
comparing the ranked indentation level of the each of the rows in the subset to the indentation level of the dominant row.

4. The method of claim 2 wherein the step of comparing the ranked indentation levels comprises the steps of:
identifying the subset of the plurality of rows to be a group of contiguous rows displayed below the dominant row;
determining the indentation level of each of the rows in the subset; and
comparing the indentation level of each of the rows in the subset with the indentation level of the dominant row.

5. The method of claim 1 wherein each of the plurality of rows has a row label containing text and the step of automatically selecting the at least one subordinate row further comprises:
comparing the text contained in the row labels of a subset of the plurality of rows with the text contained in the row label of the dominant row to locate a row having a row label including the text contained in the row label of the dominant row and additional text indicating a total row or a summary row; and
identifying as the at least one subordinate row at least one of the rows displayed between the dominant row and the located row.

6. The method of claim 1 wherein the columns have column headers indicating time periods and the method further comprises the steps of:
automatically selecting at least one of the columns by examining the column headers to determine time-based groupings;
hiding the at least one selected column; and
displaying at least one summary column containing totals of the hidden columns.

7. The method of claim 6 further comprising the step of displaying the selected at least one column in response to a predefined signal from the entry device.

8. The method of claim 1 further comprising the step of displaying the hidden at least one subordinate row in response to a predefined signal from the entry device.

9. The method of claim 1 further comprising the steps of:
replacing the dominant row on the display device with a summary row containing totals of the at least one subordinate row; and
replacing the at least one subordinate row on the display device with rows that have not been hidden, thereby compressing the spreadsheet to create a summary view.

10. The method of claim 9 further comprising the step of constructing and displaying a label for the summary row from the label of the dominant row.

11. The method of claim 1 further comprising the steps of:
selecting a referring row not within the at least one subordinate row that contains a first formula, the first formula referring to a row within the at least one subordinate row;
storing the first formula of the selected referring row; and
replacing the first formula of the selected referring row with a second formula that uses a constant to replace the reference to the row within the at least one subordinate row.

12. The method of claim 11 further comprising the steps of:
retrieving the at least one subordinate row;
retrieving the stored first formula; and
replacing the second formula of the selected referring row with the retrieved first formula.

13. The method of claim 1 wherein the step of identifying a dominant row comprises the step of identifying a dominant row in response to a predefined signal from the entry device.

14. The method according to one of the preceding claims wherein each of the plurality of rows has a row label and the step of automatically selecting the at least one subordinate row further comprises:
comparing each of the row labels of a subset of the rows with the row label of the dominant row to determine if the predefined relationship between the dominant row and the subordinate row exists.

15. The method of claim 14 wherein the row labels have ranked indentation levels and the step of automatically selecting the at least one subordinate row further comprises the step of comparing the indentation levels of each row label of a subset of the rows with the indentation level of the row label of the dominant row to determine if the predefined relationship exists.

16. The method of claim 15 wherein at least one of the plurality of rows has a blank row label and the step of comparing indentation levels comprises assigning a maximum indentation level to at least one of the plurality of rows having a blank row label.

17. The method of claim 14 wherein the row labels contain text and the step of automatically selecting the at least one subordinate row further comprises the steps of:
comparing the text contained in each row label of a subset of the rows with the text contained in the row label of the dominant row to locate a row having a row label including the text contained in the row label of the dominant row and additional text indicating a total row or a summary row; and
identifying as the selected subordinate row at least one of the rows displayed between the dominant row and the located row.

18. The method of claim 14, the spreadsheet having a plurality of columns intersecting the rows, the plurality of columns having column headers indicating time periods, the method further comprising the steps of:
selecting at least one of the plurality of columns by examining the column headers to determine time-based groupings;
hiding the selected at least one column; and
displaying at least one summary column containing totals of the hidden columns.

19. The method of claim 14 further comprising the step of displaying the hidden at least one subordinate row in response to a predefined signal from the entry device.

20. The method of claim 14 further comprising the steps of:
replacing the dominant row on the display device with a summary row containing totals of the selected at least one subordinate row; and
replacing the selected at least one subordinate row on the display device with rows that have not been selected, thereby compressing the spreadsheet display to create a summary view.

21. The method of claim 20 further comprising the step of constructing and displaying a label for the summary row from the label of the dominant row.

22. The method of claim 14 further comprising the steps of:
selecting a referring row not within the selected at least one subordinate row that contains a first formula, the first formula referring to a cell within the group of subordinate rows;
storing the first formula of the selected referring row; and
replacing the first formula of the selected referring row with a second formula that uses a constant to replace the reference to the row within the selected at least one subordinate row.

23. The method of claim 22 further comprising the steps of:
retrieving the selected at least one subordinate row;
retrieving the stored first formula; and
replacing the second formula of the selected referring row with the retrieved first formula.

24. The method according to one of the preceding claims wherein the plurality of rows includes at least one total row containing a formula indicative of the predefined relationship between the dominant row and the subordinate row further comprising the steps of:
a) automatically identifying the total row by examining the contents of a subset of the plurality of rows to locate a row containing a formula indicative of the predefined realationship between the subordinate row and the dominant row;
b) automatically selecting the at least one subordinate row by selecting at least one of the rows displayed between the dominant row and the total row.

25. The method of claim 24 further comprising the steps of:
replacing the dominant row on the display means with the total row; and replacing the selected at least one subordinate row on the display device with rows that have not been selected, thereby compressing the spreadsheet to create a summary view.

26. The method according to one of the preceding claims wherein the dominant row having a dominant relationship to at least one subordinate row is automatically identified.

## Patentansprüche

1. In einem Computer mit einer Anzeigeeinrichtung, einer Eingabeeinrichtung und einem Prozessor zum Ausführen eines Kalkulationsblattprogramms, wobei das Kalkulationsblattprogramm hervorruft, daß eine Vielzahl von sich kreuzenden Reihen und Spalten auf der Anzeigeeinrichtung angezeigt wird, manche von der Vielzahl von Reihen einen vordefinierten Zusammenhang mit anderen Reihen aufweisen und der vordefinierte Zusammenhang entweder dominant oder untergeordnet ist, umfaßt ein Verfahren zum Verstecken ausgewählter Reihen von der Vielzahl von Reihen die Schritte, daß
a) eine dominante Reihe identifiziert wird, die einen dominanten Zusammenhang mit zumindest einer untergeordneten Reihe aufweist;
b) die zumindest eine untergeordnete Reihe, die einen untergeordneten Zusammenhang mit der dominanten Reihe aufweist, automatisch ausgewählt wird; und
c) die ausgewählte, zumindest eine untergeordnete Reihe derart versteckt wird, daß die zumindest eine untergeordnete Reihe nicht auf der Anzeigeeinrichtung angezeigt wird.

2. Verfahren nach Anspruch 1, worin jede von der Vielzahl von Reihen ein in eine Rangordnung eingereihtes Einrükkungsniveau aufweist, und der Schritt des Auswählens der zumindest einen untergeordneten Reihe weiter den Schritt umfaßt, daß
die in die Rangordnung eingereihten Einrückungsniveaus eines Untersatzes von der Vielzahl von Reihen mit dem in eine Rangordnung eingereihten Einrückungsniveau der dominanten Reihe verglichen werden, um zu bestimmen, ob ein untergeordneter Zusammenhang zwischen den Reihen in dem Untersatz und der dominanten Reihe vorhanden ist.

3. Verfahren nach Anspruch 2, worin jede der Reihen in dem Untersatz einen Beginn aufweist und jede zumindest eine Leerstelle enthält, und der Schritt des Vergleichens der in eine Rangordnung eingereihten Einrückungsniveaus die Schritte umfaßt, daß
die Anzahl der Leerstellen bei dem Beginn von jeder der Reihen in dem Untersatz gezählt wird;
ein in eine Rangordnung eingereihtes Einrückungsniveau jeder der Reihen in dem Untersatz unter Verwendung der gezählten Anzahl der Leerstellen zugewiesen wird; und
das in eine Rangordnung eingereihte Einrückungsniveau von jeder der Reihen in dem Untersatz mit dem Einrükkungsniveau der dominanten Reihe verglichen wird.

4. Verfahren nach Anspruch 2, worin der Schritt des Vergleichens der in eine Rangordnung eingereihten Einrükkungsniveaus die Schritte umfaßt, daß
der Untersatz von der Vielzahl von Reihen identifiziert wird, als daß er eine Gruppe von benachbarten Reihen ist, die unter der dominanten Reihe angezeigt werden;
das Einrückungsniveau von jeder der Reihen in dem Untersatz bestimmt wird; und
das Einrückungsniveau von jeder der Reihen in dem Untersatz mit dem Einrückungsniveau der dominanten Reihe verglichen wird.

5. Verfahren nach Anspruch 1, worin jede von der Vielzahl von Reihen eine Reihenmarkierung aufweist, die Text enthält, und der Schritt des automatischen Auswählens der zumindest einen untergeordneten Reihe weiter umfaßt, daß
der Text, der in den Reihenmarkierungen eines Untersatzes von der Vielzahl von Reihen enthalten ist, mit dem Text verglichen wird, der in der Reihenmarkierung der dominanten Reihe enthalten ist, um eine Reihe zu lokalisieren, die eine Reihenmarkierung aufweist, die den Text, der in der Reihenmarkierung der dominanten Reihe enthalten ist, und zusätzlichen Text umfaßt, der eine Summenreihe oder eine Zusammenfassungsreihe anzeigt; und
als die zumindest eine untergeordnete Reihe zumindest eine der Reihen identifiziert wird, die zwischen der dominanten Reihe und der lokalisierten Reihe angezeigt werden.

6. Verfahren nach Anspruch 1, worin die Spalten Spaltenköpfe aufweisen, die Zeitperioden anzeigen, und das Verfahren weiter die Schritte umfaßt, daß
zumindest eine der Spalten automatisch ausgewählt wird, indem die Spaltenköpfe untersucht werden, um zeitbasierte Gruppierungen zu bestimmen;
die zumindest eine ausgewählte Spalte versteckt wird; und
zumindest eine Zusammenfassungsspalte angezeigt wird, die Summen der versteckten Spalten enthält.

7. Verfahren nach Anspruch 6, welches weiter die Schritte umfaßt, daß
die ausgewählte, zumindest eine Spalte in Ansprechen auf ein vordefiniertes Signal von der Eingabeeinrichtung angezeigt wird.

8. Verfahren nach Anspruch 1, welches weiter den Schritt umfaßt, daß
die versteckte, zumindest eine untergeordnete Reihe in Ansprechen auf ein vordefiniertes Signal von der Eingabeeinrichtung angezeigt wird.

9. Verfahren nach Anspruch 1, welches weiter die Schritte umfaßt, daß
die dominante Reihe auf der Anzeigeeinrichtung durch eine Zusammenfassungsreihe ersetzt wird, die Summen der zumindest einen untergeordneten Reihe enthält; und
die zumindest eine untergeordnete Reihe auf der Anzeigeeinrichtung durch Reihen ersetzt wird, die nicht versteckt worden sind, wodurch das Kalkulationsblatt komprimiert wird, um eine Zusammenfassungsansicht zu schaffen.

10. Verfahren nach Anspruch 9, welches weiter den Schritt umfaßt, daß
eine Markierung für die Zusammenfassungsreihe aus der Markierung der dominanten Reihe aufgebaut und angezeigt wird.

11. Verfahren nach Anspruch 1, welches weiter die Schritte umfaßt, daß
eine Bezugsreihe ausgewählt wird, die nicht innerhalb der zumindest einen untergeordneten Reihe liegt, die eine erste Formel enthält, wobei die erste Formel Bezug auf eine Reihe innerhalb der zumindest einen untergeordneten Reihe nimmt;
die erste Formel der ausgewählten Bezugsreihe gespeichert wird; und
die erste Formel der ausgewählten Bezugsreihe durch eine zweite Formel ersetzt wird, die eine Konstante verwendet, um den Bezug zu der Reihe innerhalb der zumindest einen untergeordneten Reihe zu ersetzen.

12. Verfahren nach Anspruch 11, welches weiter die Schritte umfaßt, daß
die zumindest eine untergeordnete Reihe zurückgeholt wird;
die gespeicherte erste Formel zurückgeholt wird; und
die zweite Formel der ausgewählten Bezugsreihe durch die zurückgeholte erste Formel ersetzt wird.

13. Verfahren nach Anspruch 1, worin der Schritt des Identifizierens einer dominanten Reihe den Schritt umfaßt, daß
eine dominante Reihe in Ansprechen auf ein vordefiniertes Signal von der Eingabeinrichtung identifiziert wird.

14. Verfahren nach einem der vorhergehenden Ansprüche, worin jede von der Vielzahl von Reihen eine Reihenmarkierung aufweist, und der Schritt des automatischen Auswählens der zumindest einen untergeordneten Reihe weiter umfaßt, daß
jede der Reihenmarkierungen eines Untersatzes der Reihen mit der Reihenmarkierung der dominanten Reihe verglichen wird, um zu bestimmen, ob der vordefinierte Zusammenhang zwischen der dominanten Reihe und der untergeordneten Reihe vorhanden ist.

15. Verfahren nach Anspruch 14, worin die Reihenmarkierungen in eine Rangordnung eingereihte Einrückungsniveaus aufweisen, und der Schritt des automatischen Auswählens der zumindest einen untergeordneten Reihe weiter den Schritt umfaßt, daß
die Einrückungsniveaus jeder Reihenmarkierung eines Untersatzes der Reihen mit dem Einrückungsniveau der Reihenmarkierung der dominanten Reihe verglichen werden, um zu bestimmen, ob der vordefinierte Zusammenhang vorhanden ist.

16. Verfahren nach Anspruch 15, worin zumindest eine von der Vielzahl von Reihen eine Leerreihenmarkierung aufweist, und der Schritt des Vergleichens der Einrückungsniveaus umfaßt, daß
ein maximales Einrückungniveau zumindest einer von der Vielzahl von Reihen, die eine Leerreihenmarkierung auf. weisen, zugewiesen wird.

17. Verfahren nach Anspruch 14, worin die Reihenmarkierungen Text enthalten, und der Schritt des automatischen Auswählens der zumindest einen untergeordneten Reihe weiter . die Schritte umfaßt, daß
der Text, der in jeder Reihenmarkierung eines Untersatzes der Reihen enthalten ist, mit dem Text verglichen wird, der in der Reihenmarkierung der dominanten Reihe enthalten ist, um eine Reihe zu lokalisieren, die eine Reihenmarkierung aufweist, die den Text, der in der Reihenmarkierung der dominanten Reihe enthalten ist, und zusätzlichen Text umfaßt, der eine Summenreihe oder eine Zusammenfassungsreihe anzeigt; und
als die ausgewählte untergeordnete Reihe zumindest eine der Reihen identifiziert wird, die zwischen der dominanten Reihe und der lokalisierten Reihe angezeigt wird.

18. Verfahren nach Anspruch 14, wobei das Kalkulationsblatt eine Vielzahl von Spalten aufweist, die die Reihen kreuzen, die Vielzahl von Spalten Spaltenköpfe aufweist, die Zeitperioden anzeigen, und das Verfahren weiter die Schritte umfaßt, daß
zumindest eine von der Vielzahl von Spalten ausgewählt wird, indem die Spaltenköpfe untersucht werden, um zeitbasierte Gruppierungen zu bestimmen;
die ausgewählte, zumindest eine Spalte versteckt wird; und
zumindest eine Zusammenfassungsspalte angezeigt wird, die Summen der versteckten Spalten enthält.

19. Verfahren nach Anspruch 14, welches weiter die Schritte umfaßt, daß
die versteckte, zumindest eine untergeordnete Reihe in Ansprechen auf ein vordefiniertes Signal von der Eingabeeinrichtung angezeigt wird.

20. Verfahren nach Anspruch 14, welches weiter die Schritte umfaßt, daß
die dominante Reihe auf der Anzeigeeinrichtung durch eine Summenreihe ersetzt wird, die Summen der ausgewählten, zumindest einen untergeordneten Reihe enthält; und
die ausgewählte, zumindest eine untergeordnete Reihe auf der Anzeigeeinrichtung durch Reihen ersetzt wird, die nicht ausgewählt worden sind, wodurch die Kalkulationsblattanzeige komprimiert wird, um eine Zusammenfassungsansicht zu schaffen.

21. Verfahren nach Anspruch 20, welches weiter den Schritt umfaßt, daß
eine Markierung für die Zusammenfassungsreihe aus der Markierung der dominanten Reihe aufgebaut und angezeigt wird.

22. Verfahren nach Anspruch 14, welches weiter die Schritte umfaßt, daß
eine Bezugsreihe ausgewählt wird, die nicht innerhalb der ausgewählten, zumindest einen untergeordneten Reihe liegt, die eine erste Formel enthält, wobei die erste Formel auf eine Zelle innerhalb der Gruppe der untergeordneten Reihen Bezug nimmt;
die erste Formel der ausgewählten Bezugsreihe gespeichert wird; und
die erste Formel der ausgewählten Bezugsreihe durch eine zweite Formel ersetzt wird, die eine Konstante verwendet, um den Bezug auf die Reihe innerhalb der ausgewählten, zumindest einen untergeordneten Reihe zu ersetzen.

23. Verfahren nach Anspruch 22, welches weiter die Schritte umfaßt, daß
die ausgewählte, zumindest eine untergeordnete Reihe zurückgeholt wird;
die gespeicherte erste Formel zurückgeholt wird; und
die zweite Formel der ausgewählten Bezugsreihe durch die zurückgeholte erste Formel ersetzt wird.

24. Verfahren nach einem der vorhergehenden Ansprüche, worin die Vielzahl von Reihen zumindest eine Summenreihe umfaßt, die eine Formel enthält, die den vordefinierten Zusammenhang zwischen der dominanten Reihe und der untergeordneten Reihe anzeigt, welches weiter die Schritte umfaßt, daß
a) die Summenreihe automatisch identifiziert wird, indem die Inhalte eines Untersatzes von der Vielzahl von Reihen untersucht werden, um eine Reihe zu lokalisieren, die eine Formel enthält, die den vordefinierten Zusammenhang zwischen der untergeordneten Reihe und der dominanten Reihe anzeigt;
b) die zumindest eine untergeordnete Reihe automatisch ausgewählt wird, indem zumindest eine der Reihen ausgewählt wird, die zwischen der dominanten Reihe und der Summenreihe angezeigt werden.

25. Verfahren nach Anspruch 24, welches weiter die Schritte umfaßt, daß
die dominante Reihe auf dem Anzeigemittel durch die Summenreihe ersetzt wird; und
die ausgewählte, zumindest eine untergeordnete Reihe auf der Anzeigeeinrichtung durch Reihen ersetzt wird, die nicht ausgewählt worden sind, wodurch das Kalkulationsblatt komprimiert wird, um eine Zusammenfassungsansicht zu schaffen.

26. Verfahren nach einem der vorhergehenden Ansprüche, worin die dominante Reihe, die einen dominanten Zusammenhang mit zumindest einer untergeordneten Reihe aufweist, automatisch identifiziert wird.

## Revendications

1. Dans une machine à calculer comprenant un dispositif d'affichage, un dispositif d'entrée, et un processeur pour exécuter un programme de feuille de calcul, le programme de feuille de calcul permettant qu'une pluralité de lignes et de colonnes qui se croisent soit affichée sur le dispositif d'affichage, quelques unes des lignes de la pluralité de lignes ayant une relation prédéterminée avec d'autres lignes, la relation prédéterminée étant soit de domination soit de subordination, un procédé pour cacher des lignes sélectionnées de la pluralité de lignes, comprenant les étapes consistant à :
a) identifier une ligne dominante ayant une relation de domination à l'égard d'au moins une ligne subordonnée ;
b) sélectionner automatiquement l'au moins une ligne subordonnée ayant une relation de subordination à l'égard de la ligne dominante ; et
c) cacher l'au moins une ligne subordonnée sélectionnée de façon telle que l'au moins une ligne subordonnée ne soit pas affichée sur le dispositif d'affichage.

2. Procédé selon la revendication 1 dans lequel chacune des lignes de la pluralité de lignes a un niveau de position classé et l'étape de sélection de l'au moins une ligne subordonnée comprend en outre l'étape de comparaison des niveaux de position classés d'un sous-ensemble de la pluralité de lignes avec le niveau de position classé de la ligne dominante afin de déterminer s'il existe une relation de subordination entre les lignes dans le sous-ensemble et la ligne dominante.

3. Procédé selon la revendication 2 dans lequel chacune des lignes dans le sous-ensemble a un début et chacun contient au moins un espace vierge et l'étape de comparaison des niveaux de position classés comprend les étapes consistant à :
compter le nombre d'espaces vierges au début de chacune des lignes dans le sous-ensemble ;
affecter un niveau de position classé à chacune des lignes dans le sous-ensemble en utilisant le nombre d'espaces vierges compté ;
comparer le niveau de position classé de chacune des lignes dans le sous-ensemble au niveau de position de la ligne dominante.

4. Procédé selon la revendication 2 dans lequel l'étape de comparaison des niveaux de position classés comprend les étapes consistant à :
identifier le sous-ensemble de la pluralité de lignes comme étant un groupe de lignes contiguës affiché en dessous de la ligne dominante ;
déterminer le niveau de position de chacune des lignes dans le sous-ensemble ; et
comparer le niveau de position de chacune des lignes dans le sous-ensemble avec le niveau de position de la ligne dominante.

5. Procédé selon la revendication 1 dans lequel chacune des lignes de la pluralité de lignes présente une indications de ligne contenant du texte et l'étape de sélection automatique de l'au moins une ligne subordonnée comprend en outre :
la comparaison du texte contenu dans les indications de ligne d'un sous-ensemble de la pluralité de lignes avec le texte contenu dans l'indication de ligne de la ligne dominante pour déterminer la position d'une ligne ayant une indication de ligne comportant le texte contenu dans l'indication de ligne de la ligne dominante et du texte additionnel indiquant une ligne de total ou une ligne de résumé ; et
l'identification comme étant l'au moins une ligne subordonnée, d'au moins une des lignes affichées entre la ligne dominante et la ligne dont position a été déterminée.

6. Procédé selon la revendication 1 dans lequel les colonnes ont des en-têtes de colonnes indiquant des périodes de temps et ce procédé comprend en outre les étapes consistant à :
sélectionner automatiquement au moins une des colonnes en examinant les en-têtes de colonnes pour déterminer des groupements sur une base temporelle ;
cacher l'au moins une colonne sélectionnée ; et
afficher au moins une colonne de résumé contenant des totaux des colonnes cachées.

7. Procédé selon la revendication 6 comprenant en outre l'étape d'affichage de l'au moins une colonne sélectionnée en réponse à un signal prédéterminé provenant du dispositif d'entrée.

8. Procédé selon la revendication 1 comprenant en outre l'étape d'affichage de l'au moins une ligne subordonnée cachée en réponse à un signal prédéterminé provenant du dispositif d'entrée.

9. Procédé selon la revendication 1 comprenant en outre les étapes consistant à :
remplacer, sur le dispositif d'affichage, la ligne dominante par une ligne de résumé contenant des totaux de l'au moins une ligne subordonnée ; et
remplacer, sur le dispositif d'affichage, l'au moins une ligne subordonnée par des lignes qui n'ont pas été cachées, de façon à comprimer la feuille de calcul pour créer un aperçu de résumé.

10. Procédé selon la revendication 9 comprenant en outre l'étape consistant à réaliser et afficher une indication pour la ligne de résumé à partir de l'indication de la ligne dominante.

11. Procédé selon la revendication 1 comprenant en outre les étapes consistant à :
sélectionner une ligne de référence qui ne se trouve pas dans l'au moins une ligne subordonnée qui contient une première formule, la première formule se référant à une ligne dans l'au moins une ligne subordonnée ;
mémoriser la première formule de la ligne de référence sélectionnée ; et
remplacer la première formule de la ligne de référence sélectionnée par une seconde formule qui utilise une constante pour remplacer la référence à la ligne dans l'au moins une ligne subordonnée.

12. Procédé selon la revendication 11 comprenant en outre les étapes consistant à :
extraire l'au moins une ligne subordonnée ;
extraire la première formule mémorisée ; et
remplacer la seconde formule de la ligne de référence sélectionnée par la première formule extraite.

13. Procédé selon la revendication 1 dans lequel l'étape d'identification d'une ligne dominante comprend l'étape d'identification d'une ligne dominante en réponse à un signal prédéterminé du dispositif d'entrée.

14. Procédé selon l'une des revendications précédentes dans lequel chacune des lignes de la pluralité de lignes a une indication de ligne et l'étape de sélection automatique d'au moins une ligne subordonnée comprend en outre :
la comparaison de chacune des indications de ligne d'un sous-ensemble des lignes avec l'indication de la ligne dominante pour déterminer si la relation prédéterminée entre la ligne dominante et la ligne subordonnée existe.

15. Procédé selon la revendication 14, dans lequel les indications de ligne ont des niveaux de position classés et l'étape de sélection automatique de l'au moins une ligne subordonnée comprend en outre l'étape de comparaison des niveaux de position de chaque indication de ligne d'un sous-ensemble des lignes avec le niveau de position de l'indication de ligne de la ligne dominante pour déterminer si la relation prédéterminée existe.

16. Procédé selon la revendication 15 dans lequel au moins l'une de la pluralité de lignes a une indication de ligne vierge et l'étape de comparaison des niveaux de position comprend l'affectation d'un niveau de position maximum à au moins une ligne de la pluralité de lignes ayant une indication de ligne vierge.

17. Procédé selon la revendication 14 dans lequel les indications de ligne contiennent du texte et l'étape de sélection automatique de l'au moins une ligne subordonnée comprend en outre les étapes consistant à :
comparer le texte contenu dans chaque indication de ligne d'un sous-ensemble des lignes avec le texte contenu dans l'indication de ligne de la ligne dominante afin de déterminer la position d'une ligne ayant une indication de ligne comprenant le texte contenu dans l'indication de ligne de la ligne dominante et du texte additionnel indiquant une ligne de total ou une ligne de résumé ; et
identifier en tant que ligne subordonnée sélectionnée au moins une des lignes affichées entre la ligne dominante et la ligne dont la position a été déterminée.

18. Procédé selon la revendication 14 dans lequel la feuille de calcul a une pluralité de colonnes croisant les lignes, la pluralité de colonnes ayant des en-têtes de colonne indiquant des périodes de temps, ce procédé comprenant en outre les étapes consistant à :
sélectionner au moins une colonne de la pluralité de colonnes en examinant les en-têtes de colonnes pour déterminer des groupements à base temporelle ;
cacher l'au moins une colonne sélectionnée ; et
afficher au moins une colonne de résumé contenant des totaux des colonnes cachées.

19. Procédé selon la revendication 14 comprenant en outre l'étape d'affichage de l'au moins une ligne subordonnée cachée en réponse à un signal prédéterminé provenant du dispositif d'entrée.

20. Procédé selon la revendication 14 comprenant en outre les étapes consistant à :
remplacer, sur le dispositif d'affichage, la ligne dominante par une ligne de résumé contenant des totaux de l'au moins une ligne subordonnée sélectionnée ; et
remplacer, sur le dispositif d'affichage, l'au moins une ligne subordonnée sélectionnée par des lignes qui n'ont pas été sélectionnées, de façon à comprimer l'affichage de la feuille de calcul pour créer un aperçu de résumé.

21. Procédé selon la revendication 20 comprenant en outre l'étape consistant à réaliser et à afficher une indication pour la ligne de résumé à partir de l'indication de la ligne dominante.

22. Procédé selon la revendication 14 comprenant en outre les étapes consistant à :
sélectionner une ligne de référence qui ne se trouve pas dans l'au moins une ligne subordonnée sélectionnée qui contient une première formule, la première formule se référant à une cellule dans le groupe des lignes subordonnées;
mémoriser la première formule de la ligne de référence sélectionnée ; et
remplacer la première formule de la ligne de référence sélectionnée par une seconde formule qui utilise une constante pour remplacer la référence à la ligne dans l'au moins une ligne subordonnée sélectionnée.

23. Procédé selon la revendication 22 comprenant en outre les étapes consistant à :
extraire l'au moins une ligne subordonnée sélectionnée ;
extraire la première formule mémorisée ; et
remplacer la seconde formule de la ligne de référence sélectionnée par la première formule extraite.

24. Procédé selon l'une des revendications précédentes dans lequel la pluralité de lignes comporte au moins une ligne de total contenant une formule représentative de la relation prédéterminée entre la ligne dominante et la ligne subordonnée, ce procédé comprenant en outre les étapes consistant à :
a) identifier automatiquement la ligne de total en examinant les contenus d'un sous-ensemble de la pluralité de lignes pour déterminer la position d'une ligne contenant une formule représentative de la relation prédéterminée entre la ligne subordonnée et la ligne dominante ;
b) sélectionner automatiquement l'au moins une ligne subordonnée en sélectionnant au moins l'une des lignes affichées entre la ligne dominante et la ligne de total.

25. Procédé selon la revendication 24 comprenant en outre les étapes consistant à :
remplacer, sur le moyen d'affichage, la ligne dominante par la ligne de total ; et remplacer, sur le dispositif d'affichage, l'au moins une ligne subordonnée sélectionnée par des lignes qui n'ont pas été sélectionnées, de façon à comprimer la feuille de calcul afin de créer un aperçu de résumé.

26. Procédé selon l'un des revendications précédentes dans lequel la ligne dominante ayant une relation de domination à l'égard d'au moins une ligne subordonnée est identifiée automatiquement.
